# EUROPEAN PATENT APPLICATION

(11) **EP 0 546 204 A1**
(43) Date of publication of application: **16.06.1993**
(21) Application number: 91121138.1
(22) Date of filing: 10.12.1991
(51) Int. Cl.: F25D 16/00, F28D 20/00, C09K 5/06

(54) **Cooling or heating method**

(71) Applicant: SHINKO INDUSTRIAL COMPANY LIMITED, Kita-ku, Osaka-City, Osaka-Prefecture (JP)
(72) Inventor: Akamatu, Yukihiko, Hirakata City (JP)
(74) Representative: Eisenführ, Speiser & Partner

(57) **Abstract**

The present invention relates to a method of cooling or heating object (2) such as air and the like with mixture between heat reserving agent (B) being sealed in a microcapsule (A) and water or brine acting as heat medium.

## Description

### Abstract of Disclosure

The present invention relates to a method of cooling or heating object such as air and the like with mixture between heat reserving agent being sealed in a microcapsule and water or brine acting as heat medium.

### Background of the Invention

Generally, a method of cooling or heating the object such as the air by means of cooling of heating a heat exchanger in a manner of circulating the heat medium including the water and the brine (e.g. ethylene glycol) and the like, which are cooled or heated by a cooling device or a heating device, in a closed circuit consisting of the cooling device or the heating device and the heat exchanger, has been known as one of methods of cooling or heating the heat exchanger for air conditioner. Since this method utilizes only sensible heat so that the heat exchange may be performed, however, it has a drawback of lowering the heat transfer capacity.

In that connection, if the heat reserving agent can flow into a transfer tube as the heat medium, a possibility of performing the heat exchange, attained by utilizing also latent heat (melting heat or freezing heat) taking place in accordance with the heat reserving principles of the heat reserving agent, enables not only diameter of the transfer tube required for feeding the specified heating value but also energy for the heat transfer to be reduced. From that view, a trial of selecting the heat reserving agent which is not dissolved into the water or the brine, making such an agent particulate by a crusher, and forming mixture between the particulate agent and the water or the brine, and flowing the resulting mixed solution into the transfer tube is made but the efforts become in vain, because a group of particulate heat reserving agent becomes extremely large mass in the transfer tube to close the tube and kinds of the heat reserving agent are limited to agent which is not dissolved into the water or the brine and does not corrode the metal.

### Summary of the Invention

The first object of the present invention is to provide a cooling or heating method such that a bonding of a group of heat reserving agent, one of the afore-mentioned problems, is prevented, the heat reserving agent coated by resin, namely the agent sealed in resin-made microcapsule is made in order that the kinds of the agent are not limited, a mixture between the agent in the capsule and the water or the brine is made, and the mixed solution is used as the heat medium, whereby the heat transfer capacity is enhanced and the afore-mentioned method becomes higher in heat efficiency.

The second object of the present invention is to provide a cooling method in a manner that the heat reserving agent, relatively changed, i.e. freezed at over 0 _{°} C to less than 10°C of temperature of the water or heavy water, which is sealed in the resin-made microcapsule, is mixed into the brine and the resulting mixture is used as cooling medium, whereby the heat transfer capacity is enhanced and the afore-mentioned method becomes higher in heat efficiency.

The third object of the present invention is to provide a heating method in a manner that the heat reserving agent, relatively changed, i.e. dissolved at over 50 _{°} C to less than 50 _{°} C of temperature of paraffin or wax, which is sealed in the resin-made microcapsule, is mixed into the water or the brine and the resulting mixture is used as the heat medium, whereby the heat transfer capacity is enhanced and the afore-mentioned method becomes higher in heat efficiency.

### Brief Description of the Drawing

Fig. 1 is an outline of block diagram of the cooling method in accordance with the present invention;

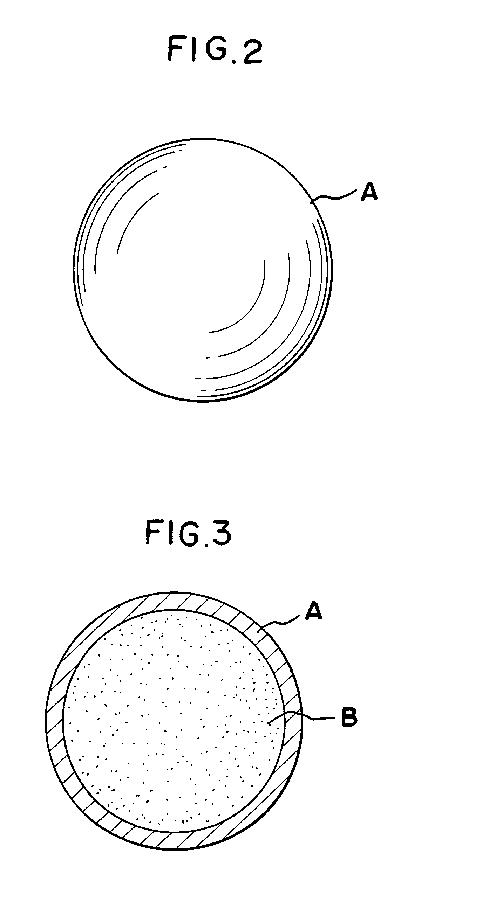

Fig. 2 is an enlarged view of the resin-made capsule in the heat medium, the capsule being used for the present invention; and
Fig. 3 is a sectional view of the resin-made capsule of Fig. 2.

A specific description of the case where the method of the present invention is applied to cool the object is made as follows:
1 is a cooling device comprising compressor 11, condenser 12, and cooling part 13. 2 is a heat exchanger. 3 is a transfer tube, and 4 is a return tube. These tubes 3 and 4 construct a closed circuit between the cooling section 13 and the heat exchanger 2 and circulate the heat medium (cool medium) in the closed circuit by means of a pump 5.

The heat medium comprises mixture between the heat reserving agent B consisting of the water with 0°C of freezing point, the heavy water with 3.9 _{°} C of freezing point, hydrate salt, eutectic matter, and organic compound, which is sealed in a multiplicity of polyethylene-resin-made and circular capsules A, and the water or the brine. The optimum heat reserving agent is relatively changed, i.e. freezed at over 0_{°}C to less than 10_{°}C of temperature. It is preferable that a ratio between the total amount of the heat reserving agent and amount of the water or the brine is 4/6. The heat medium being cooled by drive of the cooling device 1 is fed by way of the transfer tube 3 to the heat exchanger 2 by a pump 5 and, after passing the heat exchanger, the heat medium returns by way of the return tube 4 to the cooling part 13, such a circulating flow is maintained during a drive of the pump 5.

The afore-mentioned circulation of the heat medium causes the heat exchanger 2 to be cooled and in the case where the object is the air, namely the present invention is used for the air conditioner, the heat exchange takes place between the air and the heat medium, cool wind is supplied to area covered by the air conditioner.

Since the heat reserving agent in all the capsules, located in the heat medium being cooled by drive of the cooling device in the closed circuit, is freezed to become solid mass, thereby possessing inherently the latent heat, a heat loss in the transfer tube 3 running to the heat exchanger 2 is low in amount, melting heat of the heat reserving agent is mainly utilized in performing the heat exchange with the air and the like in the heat exchanger 2, exchanged heating value, including the sensible heat exchange, with the air side is very enlarged and the amount of the heat reserving agent in the capsule, located in the heat medium returning to the cooling part 13, becomes slight, whereby the heat reserving agent is efficiently and quickly freezed so that cooling efficiency is enhanced.

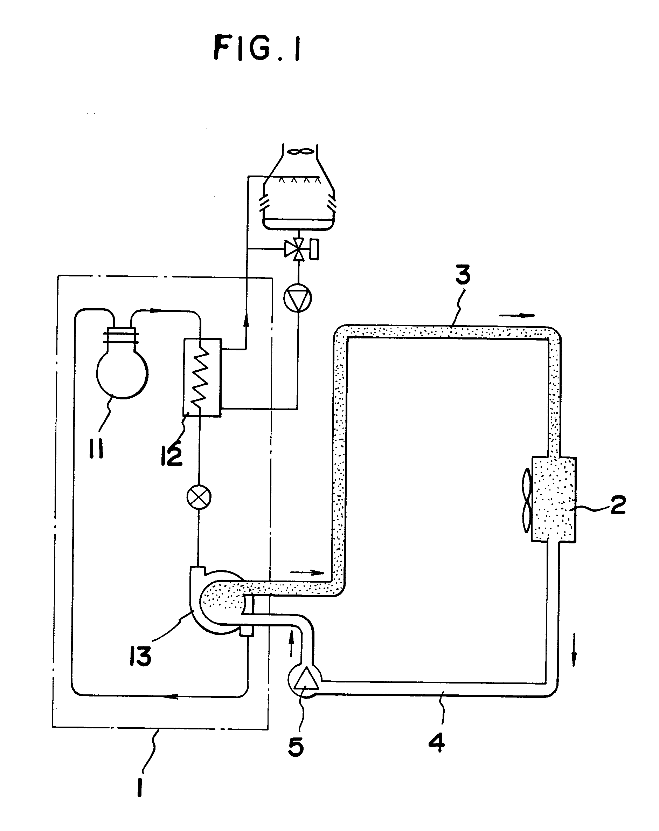

As for the heating method, the heating device is used in place of the cooling device of Fig. 1 and if the heat reserving agent in the capsule, such as paraffin and wax, is selected to be relatively changed, namely dissolved at over 40 _{°} C to less than 50 _{°} C, similarly to the case of cooling method, the freezing heat, equivalent to the latent heat, can be utilized, a heat loss in the transfer tube 3 is low in amount, the exchanged heating value, including the sensible heat exchange, with the air side is very enlarged, the amount of heat reserving agent in the capsule becomes slight, whereby the heat reserving agent is efficiently and quickly dissolved so that heating efficiency is enhanced.

According to the cooling or heating method of the present invention, since the mixture between the heat reserving agent, sealed in a multiplicity of resin-made microcapsules, and the water or the brine is used as the heat medium, it becomes possible that the heat including the latent heat is transferred, a protection of the heat reserving agent by the resin-made coating prevents a bonding of a group of particulate heat reserving agent from closing the transfer tube, and even if the heat reserving agent has a nature of being dissolved in the water or the brine, it can be used so that depending on the applications, its kinds can be freely selected.

In addition, according to the method of the present invention, a realization of transferring the heat including the latent heat allows the heat transfer capacity to become more than 5 times as large as the conventional transfer only of the sensible heat generated by the water or the brine with a slight difference being subject to the heat reserving force of the heat reserving agent, and a sectional area of the piping is reduced to be less than 1/5, the cooling or heating capacity being not lowered, so the diameters of the transfer tube and the return tube can be reduced, whereby heat absorption amount from the outside or heat discharge amount to the outside can be reduced so that in addition to a possibility of maintaining the heat reserving effect for a long time, an improvement in executional properties is made, and a reduction in amount of power required for the heat transfer enables such costs as running charge to be minimized.

Using of the heat reserving agent which can be freezed at over 0°C of temperature will allow the cooling device to become smaller and the small- sized cooling device whose command is lower to be used so that economical operation is brought into reality. When the operation is made, using a method of replacing mainly the latent heat of the heat reserving agent, difference in temperature of the heat medium between the insides of the transfer tube and the return tube can be reduced, so both the tubes may adopt double tube system or junction system, whereby the piping work and adiabetic processing can be easily performed, the adiabetic effect being enhanced.

## Claims

1. In a cooling or heating method, wherein an object is cooled or heated by means of cooling or heating a heat exchanger by circulating heat medium, cooled or heated by a cooling device or heating device, in a closed circuit comprising said cooling device or said heating device and said heat exchanger, said cooling or heating method characterized in that said heat medium is formed out of mixture between heat reserving agent, comprising water, heavy water, hydrate salt, eutectic solution, and organic compound, which is sealed in a multiplicity of resin-made microcapsules, and water or brine.

2. A cooling method as defined in claim 1, wherein heat medium is formed of mixture between heat reserving agent, comprising water, heavy water, hydrate salt, eutectic solution, and organic compound, which is relatively changed at over 0°C to less than 10°C of temperature and is sealed in a multiplicity of resin-made microcapsules, and water or brine.

3. A heating method as defined in claim 1, wherein heat medium is formed of mixture between heat reserving agent, comprising water, heavy water, hydrate salt, eutectic solution, and organic compound, which is relatively changed at over 40 °C to less than 50 °C of temperature and is sealed in a multiplicity of resin-made microcapsules, and water or brine.
